# EUROPÄISCHE PATENTSCHRIFT

(11) **EP 3 209 834 B1**
(45) Veröffentlichungstag und Bekanntmachung des Hinweises auf die Patenterteilung: **09.12.2020**
(21) Anmeldenummer: 15781967.3
(22) Anmeldetag: 21.10.2015
(51) Int. Cl.: E03D 5/02, E03D 1/00, B61D 35/00, B60R 15/04, B64D 11/02, E03F 1/00

(54) **SANITÄREINHEIT MIT ÜBERWACHUNGSEINRICHTUNG**
SANITARY UNIT WITH MONITORING DEVICE
ENSEMBLE SANITAIRE MUNI D'UN DISPOSITIF DE SURVEILLANCE

(30) Priorität: 23.10.2014 DE 202014008423 U
(43) Veröffentlichungstag der Anmeldung: 30.08.2017
(73) Patentinhaber: Evac GmbH, 22880 Wedel (DE)
(72) Erfinder: GETMANN, Dennis, 22880 Wedel (DE); MEYER, Patrick, 22880 Wedel (DE)
(74) Vertreter: Eisenführ Speiser
(86) Internationale Anmeldenummer: PCT/EP2015/074361
(87) Internationale Veröffentlichungsnummer: WO 2016/062765

(56) Entgegenhaltungen:
- WO-A1-2007/131512
- WO-A1-2011/012459
- DE-A1-102004 042 147
- US-A- 5 133 853

## Beschreibung

Die Erfindung betrifft eine mobile Sanitäreinrichtung, umfassend ein Becken mit einer oberen Öffnung, einen Wasservorratsbehälter, der mit dem Becken über eine Wasserleitung verbunden ist, die dem Becken Wasser aus dem Wasservorratsbehälter zuführt, einen Abwasserbehälter, der mit dem Becken über eine Abwasserleitung verbunden ist, die Abwasser aus dem Becken von einer Beckenauslassöffnung zu dem Abwasserbehälter abführt, einen ersten Zwischenbehälter, der in die Wasserleitung zwischen Wasservorratsbehälter und Becken oder in die Abwasserleitung zwischen Beckenauslassöffnung und Abwasserbehälter eingesetzt ist. Ein weiterer Aspekt der Erfindung ist ein Verfahren zur Erkennung eines Betriebsfehlers bei einer solchen Sanitäreinrichtung.

Mobile Sanitäreinrichtungen der zuvor beschriebenen Art werden an Bord von Fahrzeugen, beispielsweise gleisgebundenen Fahrzeugen, Bussen, Flugzeugen oder Wasserfahrzeugen eingesetzt und im Sinne dieser Beschreibung und der Ansprüche soll dies mit dem Begriff "mobil" beschrieben werden. Die Sanitäreinrichtungen können als Becken insbesondere ein Toilettenbecken aufweisen, welches durch die Funktionen der Sanitäreinrichtung dann mit Spülwasser gereinigt werden kann und aus dem Abwasser und Spülwasser abgezogen und in den Abwassertank abgeführt werden kann. Als Becken im Sinne der Erfindung kann aber auch ein Handwaschbecken zum Einsatz kommen, ein Urinal oder andere Auffangbecken wie Duschwannen, die in solchen Sanitäreinrichtungen zum Einsatz kommen.

Sanitäreinrichtungen dieser Art können grundsätzlich sowohl die Frischwasser- oder Spülwasserzufuhr als auch die Abwasserabfuhr gravitätisch, das heißt durch Schwerkrafteinfluss alleine durchführen. Dies bedingt, dass der Frisch- oder Spülwasserbehälter oberhalb der Abgabestelle in das Becken beziehungsweise oberhalb des Beckens angeordnet ist und der Abwasserbehälter unterhalb der Auslassöffnung des Beckens beziehungsweise unterhalb des Beckens angeordnet ist.

Eine solche Anordnung ist aber in zahlreichen Einsatzfällen aufgrund baulicher und räumlicher Restriktionen nicht möglich. Es ist daher üblich, Frisch- und Spülwasserzufuhr und Abwasserabfuhr durch einen aktiven Antrieb durchzuführen, der typischerweise durch eine pneumatische Unterstützung mittels Überdruck und Unterdruck erfolgt. Neben den baulichen und konstruktiven Vorteilen kann hierdurch auch eine Beschleunigung der Wasserzufuhr und der Wasserabfuhr erzielt werden, was insgesamt eine bessere Hygiene und Funktionalität der Sanitäreinrichtung bewirkt.

Häufig ist es bei Sanitäreinrichtungen nicht erwünscht, den gesamten Spül- oder Frischwassertank zu diesem Zweck mit einem Überdruck zu beaufschlagen, um das Wasser daraus heraus zu befördern und auch nicht, den gesamten Abwassertank mit einem Unterdruck zu beaufschlagen, um Abwasser in den Abwassertank hineinzusaugen. Um diese Notwendigkeit zu vermeiden, ist es bekannt, einen Zwischenbehälter stromabwärts des Frisch- beziehungsweise Spülwassertanks anzuordnen oder einen Zwischenbehälter stromabwärts des Beckens vor den Abwassertank in die Abwasserleitung einzusetzen. Diese Zwischenbehälter sind durch Ventile in den Leitungen absperrbar und ermöglichen es somit, durch den Aufbau von Unterdruck oder Überdruck Wasser in den Zwischenbehälter einzusaugen und Wasser aus dem Zwischenbehälter auszupressen. Grundsätzlich sind hierbei verschiedene Ausführungsformen denkbar und in bestimmten Anwendungen vorteilhaft, die aus einer Kombination von Saugvorgängen mittels Unterdruck, aus Pressvorgängen mittels Überdruck oder Abführvorgängen mittels gravitätischem Fluss des Frischwasser, Spülwassers oder Abwassers funktionieren. Prinzipiell kann Frisch- oder Spülwasser durch einen in einem Zwischenbehälter aufgebauten Unterdruck aus dem Frisch- beziehungsweise Spülwassertank in den Zwischenbehälter eingesaugt werden, darauffolgend durch einen darin aufgebauten Überdruck aus dem Zwischenbehälter in das Becken abgegeben werden, dann das Abwasser aus dem Becken durch einen weiteren Zwischenbehälter in der Abwasserleitung, in dem ein Unterdruck aufgebaut wird, abgesaugt werden und schließlich durch einen Überdruck in diesem weiteren Zwischenbehälter in den Abwassertank befördert werden. Jeder dieser pneumatischen Beförderungsschritte kann auch durch eine gravitätische Förderung ersetzt werden.

Sanitäreinrichtungen dieser Art haben sich bewährt und werden in einem hohen Automatisierungsgrad betrieben, bei dem die Frisch- und Spülwasserzufuhr und die Abwasserabfuhr durch eine Steuerungseinheit in einer vorbestimmten Abfolge ausgeführt werden. Dabei werden eine Reihe von Ventilen geschaltet, Unterdruckerzeuger und Überdruckerzeuger oder-quellen durch Öffnen und Sperren von Ventilen aktiviert bzw. aufgeschaltet.

Ein teilweises oder vollständiges Versagen solcher Bauteile wie Ventile, Unterdruckerzeuger, Überdruckerzeuger kann dazu führen, dass ein Wasserzufuhrvorgang oder ein Wasserabfuhrvorgang nicht mehr vollständig ausgeführt wird oder überhaupt nicht mehr durchgeführt werden kann. Weiterhin kann es passieren, dass durch eine solche Fehlfunktion oder Funktionsbeeinträchtigung eine Überfüllung des Beckens oder des Zwischenbehälters auftritt die auch bis zum Überlaufen von Becken oder Zwischenbehälter führen kann. Dies ist nachteilhaft und es ist wünschenswert, solche Fehlfunktionen frühzeitig zu erkennen, um ein Austreten von Flüssigkeiten vorbeugen zu können.

Aus WO 2011/012459 A1 ist eine Vakuumtoilette vorbekannt, welche einen Zwischenbehälter zwischen einem Toilettenbecken und einem Fäkalientank aufweist. Der Zwischenbehälter ist mit einem Einlassschieber und einem Auslassschieberventil ausgerüstet und kann mittels einer Vakuumeinheit evakuiert und mit Druck beaufschlagt werden. Weiterhin ist ein Drucksensor, der ein Öffnen des Einlassschiebers bei Überdruck im Zwischenbehälter verhindert, ein Niveausensor in einem Frischwasserbehälter, der einen Spülwassermangel im Frischwasserbehälter signalisiert, und ein Niveausensor im Toilettenbecken, der das Überlaufen des Toilettenbeckens bei Verstopfungen verhindert, vorgesehen. Weiterhin sind am Fäkalientank zwei Niveausensoren angeordnet, welche unterschiedliche Pegel im Fäkalientank detektieren.

Aus DE 10 2004 042 147 A1 ist eine Vakuumtoilettenanordnung vorbekannt, bei der eine Zwischenkammer zwischen Toilettenschüssel und einem die Toilettenschüssel abstützenden Abwassertank eingesetzt ist. Die Zwischenkammer und die Toilettenschüssel werden integral von dem Abwassertank aufgenommen. Die Zwischenkammer verfügt über einen Füllstandsensor zur Erkennung des zulässigen Füllhöchststandes darin.

Aus WO 2007 131 512 A1 ist ein Vakuumtoilettensystem bekannt, welches ebenfalls eine Toilettenschüssel und einen daran angeschlossenen Zwischentank zum Abführen von Abwasser aufweist. Am Zwischenspeicher werden physikalische Parameter erfasst, wie ein Druck, eine Temperatur, ein Fluss.

Aus US 5 133 853 ist ein weiteres Vakuumtoilettensystem mit einem Zwischentank vorbekannt. Auch hier wird Abwasser durch einen Unterdruck im Vakuumbehälter angesaugt und hierauf folgend der Zwischenbehälter unter Überdruck gesetzt, um das Abwasser aus dem Zwischenbehälter weiter zu fördern.

Der Erfindung liegt die Aufgabe zugrunde, eine Sanitäreinrichtung bereitzustellen, bei der eine Erkennung solcher Fehlfunktionen zuverlässig möglich ist.

Diese Aufgabe wird erfindungsgemäß mit einer Sanitäreinrichtung nach Anspruch 1 gelöst.

Es wird eine elektronische Uberwachungseinheit verwendet, um Fehlfunktionen der Sanitäreinrichtung zu erkennen. Diese elektronische Überwachungseinheit verwendet Sensordaten eines Sensors, der einen Zustand im ersten Zwischenbehälter erfasst. Unter einem Zustand soll hierbei ein Druck, also ein Überdruck oder ein Unterdruck, ein Füllstand, also ein Pegelstand innerhalb des ersten Zwischenbehälters beziehungsweise ein Wasservolumen innerhalb des ersten Zwischenbehälters, ein diesem Wasservolumen entsprechendes Gewicht des ersten gefüllten Zwischenbehälters oder eine Temperatur im ersten Zwischenbehälter verstanden werden. Der Zustand kann in Form eines einzelnen Messwerts eine zeitliche Momentaufnahme sein, ebenso kann der Zustand auch eine zeitliche Abfolge von Messwerten sein, also ein Verlauf von Messwerten. Dieser Messwert beziehungsweise dieser Verlauf von Messwerten wird erfindungsgemäß mit einem zuvor abgespeicherten Sollwert beziehungsweise zuvor abgespeicherten Sollwertverläufen verglichen. Diese zuvor abgespeicherten Sollwerte beziehungsweise Sollwertverläufe charakterisieren vorzugsweise einen ordnungsgemäßen Betriebsablauf der Sanitäreinrichtung, sodass bei dem Vergleich festgestellt werden kann, dass die Sanitäreinrichtung ordnungsgemäß abläuft, wenn die gemessenen Werte mit den Sollwerten übereinstimmen. Dabei ist zu verstehen, dass ein Sollwert oder ein Sollwertablauf ebenso wie ein Messwert beziehungsweise Messwerteablauf jeweils einem einzelnen Betriebszustand oder Betriebsvorgang der Sanitäreinrichtung zugeordnet ist und folglich zu einem bestimmten Zeitpunkt oder über einen bestimmten Zeitraum eines solchen Betriebsablaufs gemessen werden kann, um eine Aussage über die Funktion der Sanitäreinrichtung zu erhalten.

Weicht der Messwert oder die Messwertabfolge von dem Sollwert bzw. der Sollwertabfolge ab, so wird erfindungsgemäß eine Fehlermeldung ausgegeben, da hieraus geschlossen werden muss, dass eine Funktionsbeeinträchtigung in Form eines Defekts eines Bauteils der Sanitäreinrichtung vorliegt. Dabei ist zu verstehen, dass unter einer Abweichung von einem Sollwert auch verstanden werden kann, dass der Sollwert als kritischer Wert abgespeichert ist und als solcher kritischer Wert mit dem Messwert verglichen wird. In diesem Fall ergibt sich eine Funktionsbeeinträchtigung, sofern der Messwert dem Sollwert entspricht und eine Fehlermeldung wird entsprechend in dem Fall einer solchen Übereinstimmung ausgegeben. Eine Abweichung vom Sollwert kann dabei auch unter Berücksichtigung eines Toleranzbereichs festgestellt werden.

Unter einer Fehlermeldung kann hierbei im einfachsten Falle ein optisches oder akustisches Signal verstanden werden, welches eine Fehlfunktion anzeigt. Die Fehlermeldung kann fortbildungsgemäß aber auch in einer codierten Mitteilung oder Klartextmitteilung bestehen, die über den Fehler informiert und gegebenenfalls auch eine Beschreibung oder Eingrenzung des Fehlers beziehungsweise des defekten Bauteils enthält. Die Fehlermeldung kann auch als Signal dazu dienen, die Funktion und den weiteren Betrieb der Sanitäreinrichtung zu unterbrechen, um Folgeschäden zu vermeiden.

Gemäß einer ersten bevorzugten Ausführungsform ist vorgesehen, dass der erste Sensor eine Folge von Messwerten aufnimmt und in der elektronischen Speichereinheit eine Abfolge von mehreren zeitlich aufeinander Sollwerten gespeichert ist, die einen Sollwertverlauf ergeben, und dass die elektronische Vergleichseinheit ausgebildet ist, um die Folge von Messwerten mit der Abfolge von Sollwerten zu vergleichen und bei Abweichung der Folge von Messwerten von der Abfolge von Sollwerten eine Fehlermeldung auszugeben. Gemäß dieser Ausführungsform werden zeitlich aufeinanderfolgende Messwerte durch den Sensor erfasst und mit einer Abfolge von Sollwerten, die einem zeitlichen Verlauf bei einem Funktionsvorgang der Sanitäreinrichtung entsprechen, verglichen. So kann beispielsweise ein Druckaufbau oder ein Druckabfall oder ein Unterdruckaufbau oder Unterdruckabfall in dem ersten Zwischenbehälter durch die Messwerte erfasst werden und mit einer entsprechenden Abfolge von Sollwerten verglichen werden. Die Frequenz, mit der die Messwerte aufgenommen werden, kann dabei entsprechend der notwendigen Auflösung und der Dauer der Messwertaufnahme gewählt werden und kann im Bereich von 1 Hertz bis zu 1 Kilohertz oder höher ausgewählt werden. Der Vergleich der Folge von Messwerten mit der Abfolge von Sollwerten kann dabei solcher Art erfolgen, dass eine Steigung, die aus der Folge beziehungsweise Abfolge berechnet werden kann, miteinander verglichen wird. Ebenso kann der Zeitpunkt eines Stetigkeitssprungs oder das Vorhandensein eines Stetigkeitssprungs das Ergebnis eines solchen Vergleichs sein. So wird beispielsweise bei einem Absaugvorgang von Abwasser aus dem Becken in den ersten Zwischenbehälter das Ende des Flüssigkeitsflusses und das daraus resultierende Ansaugen von Luft aus dem Becken in den ersten Zwischenbehälter regelmäßig durch einen Stetigkeitssprung im Verlauf des Unterdrucks im Zwischenbehälter charakterisiert und der Zeitpunkt dieses Stetigkeitssprungs lässt somit einen Rückschluss auf die Menge des abgesaugten Abwassers zu.

Noch weiter ist es bevorzugt, wenn der erste Sensor ein Drucksensor ist zur Messung eines Über- oder Unterdrucks im ersten Zwischenbehälter, der Messwert bzw. die Folge von Messwerten einen Über- oder Unterdruck bzw. Über- oder Unterdruckverlauf im ersten Zwischenbehälter charakterisieren, und der Sollwert bzw. die Abfolge von Sollwerten einen Sollüber- bzw. Sollunterdruck bzw. einen Sollüber- bzw. -Sollunterdruckverlauf im ersten Zwischenbehälter definieren. Unter einem Drucksensor ist hierbei ein Sensor zu verstehen, der einen Unterdruck oder Überdruck im ersten Zwischenbehälter erfassen kann, und zwar qualitativ oder quantitativ, das heißt das bloße Vorhandensein des Unterbeziehungsweise Überdrucks oder die Höhe des Unter- beziehungsweise Überdrucks. Dabei ist im Sinne dieser Beschreibung und der nachfolgenden Ansprüche unter einem Ansteigen des Überdrucks zu verstehen, dass sich der Druck von einem niedrigen Druck zu einem höheren Druck entwickelt und unter einem Ansteigen oder Verstärken eines Unterdrucks zu verstehen, dass sich der Druck von einem niedrigen Druck zu einem noch niedrigerem Druck bewegt. Entsprechend ist unter einem Abfallen eines Überdrucks zu verstehen, dass der Druck sich von einem höheren Wert zu einem niedrigeren Wert entwickelt und unter einem Abfallen eines Unterdrucks zu verstehen, dass sich der Druck von einem niedrigen Druck zu einem höheren Druck entwickelt.

Durch die Messung eines Überdrucks beziehungsweise Unterdrucks im ersten Zwischenbehälter können typische Defekte, die in einer Sanitäreinrichtung auftreten können, zuverlässig erfasst werden. Insbesondere können hierdurch undichte Ventile ermittelt werden, die sich regelmäßig durch ein Absinken des Überdrucks beziehungsweise Abfallen des Unterdrucks im ersten Zwischenbehälter bemerkbar machen, wenn ein Betriebszustand herrscht, in dem der erste Zwischenbehälter durch die Ventile allseits abgesperrt sein müsste. Durch die Messung eines Über- beziehungsweise Unterdrucks kann auch zuverlässig ein Ausfall einer Unterdruckquelle oder Überdruckquelle detektiert werden, indem trotz Aktivierung der Über- beziehungsweise Unterdruckquelle keine oder keine nennenswerte Druckänderung im ersten Zwischenbehälter erfasst wird. Schließlich kann durch eine Beobachtung einer Folge von Druckmesswerten im ersten Zwischenbehälter auch ermittelt werden, wie viel Flüssigkeit aus dem ersten Zwischenbehälter ausgepresst oder in den ersten Zwischenbehälter eingesaugt wurde, wie zuvor beschrieben, und mit welcher Strömungsgeschwindigkeit dies erfolgte, indem die Steigung der Kurve des Drucks über der Zeit hierzu ausgewertet wird. So lässt beispielsweise eine flache Steigung im Sinne eines sehr langsamen Abfalls des Unterdrucks bei einem Absaugvorgang aus dem Becken in den ersten Zwischenbehälter auf eine Verstopfung schließen, ebenso ein nur langsames Abfallen des Überdrucks in einem ersten Zwischenbehälter, der Frisch- oder Spülwasser in das Becken mittels eines Überdrucks auspresst, auf eine entsprechende Verstopfung der Austrittsöffnungen oder Düsen in das Becken schließen. Erfindungsgemäß ist der erste Zwischenbehälter in die Abwasserleitung zwischen Beckenauslassöffnung und Abwasserbehälter eingesetzt und eine Steuerungseinheit ist vorhanden und ausgebildet, um einen Absaugvorgang aus dem Becken zu steuern, indem ein Unterdruck in dem ersten Zwischenbehälter aufgebaut wird, der erste Zwischenbehälter mit dem Becken in Fluidverbindung gesetzt wird, Flüssigkeit aus dem Becken in den ersten Zwischenbehälter gesaugt wird, die Fluidverbindung zwischen Becken und Zwischenbehälter geschlossen wird, ein Überdruck im ersten Zwischenbehälter aufgebaut wird, und der erste Zwischenbehälter mit dem Abwassertank verbunden wird, und die Vergleichseinheit ausgebildet ist, um eine Fehlermeldung auszugeben, wenn der Messwert des Sensors in einem Betriebszeitpunkt, zu dem im ersten Zwischenbehälter ein Unterdruck aufgebaut wird, einen Unterdruck anzeigt, der kleiner ist als ein Sollunterdruck, oder der Messwert des Sensors in einem Betriebszeitpunkt, zu dem Flüssigkeit aus dem Becken in den ersten Zwischenbehälter gesaugt wird, einen Unterdruckverlauf anzeigt, der langsamer abfällt als ein Sollunterdruckverlauf.

Demnach wird eine bevorzugte Steuerungsabfolge der Sanitäreinrichtung durchgeführt, um Abwasser aus dem Becken in den ersten Zwischenbehälter einzusaugen und aus dem ersten Zwischenbehälter in einen Abwassertank abzuführen. Der erste Zwischenbehälter ist hierzu in die Abwasserleitung zwischen Becken und Abwassertank zwischengeschaltet und beidseits, das heißt zum Becken und zum Abwassertank mittels eines Ventils absperrbar. Durch entsprechende Schaltung dieser Ventile kann dann bei beidseits des ersten Zwischenbehälters geschlossenen Ventilen ein Unterdruck im ersten Zwischenbehälter aufgebaut werden, um dann nach Öffnen eines Ventils Wasser aus dem Becken in den ersten Zwischenbehälter zu saugen, hierauf folgend bei wiederum beidseits abgesperrten Ventilen ein Überdruck im ersten Zwischenbehälter aufgebaut werden, um das Abwasser daraus nach Öffnen des anderen Ventils in den Abwassertank zu drücken. Bei diesem Betriebsvorgang kann grundsätzlich aufgrund einer Undichtigkeit eines oder beider Ventile der Unterdruck im ersten Zwischenbehälter nicht den gewünschten Sollwert erreichen, was erfindungsgemäß festgestellt und als Fehlermeldung ausgegeben werden kann. Bei Ausfall der Unterdruckquelle kann auch gar kein Unterdruck im ersten Zwischenbehälter aufgebaut werden, was wiederum als Fehlermeldung ausgegeben werden kann. Weiterhin kann anhand einer Folge von Messwerten der Vorgang des Einsaugens des Abwassers aus dem Becken in den ersten Zwischenbehälter erfasst werden und mit einer entsprechenden Abfolge von Sollwerten verglichen werden. Wird hierbei festgestellt, dass der Unterdruck im ersten Zwischenbehälter langsamer absinkt als dies durch die Sollwertabfolge abgespeichert und vorgegeben ist, kann hieraus auf eine Verstopfung geschlossen werden und eine entsprechende Fehlermeldung ausgegeben werden.

Dabei ist es noch weiter bevorzugt, wenn die Steuerungseinheit ausgebildet ist, um nach dem Absaugvorgang einen Nachspülvorgang aus dem Becken zu steuern, indem die Steuerungseinheit einen Ablauf ansteuert, der eine vorbestimmte Menge an Spülflüssigkeit dem Becken zuführen würde, ein Unterdruck in dem Zwischenbehälter aufgebaut wird, der erste Zwischenbehälter mit dem Becken in Fluidverbindung gesetzt wird, die Spülflüssigkeit aus dem Becken in den ersten Zwischenbehälter gesaugt wird, die Fluidverbindung zwischen Becken und erstem Zwischenbehälter geschlossen wird, ein Überdruck im ersten Zwischenbehälter aufgebaut wird, und der erste Zwischenbehälter mit dem Abwassertank verbunden wird, und die Vergleichseinheit ausgebildet ist, um anhand des Verlaufs der Messwerte des Sensors in einem Betriebszeitpunkt, zu dem die Spülflüssigkeit aus dem Becken in den ersten Zwischenbehälter gesaugt wird oder die Spülflüssigkeit aus dem ersten Zwischenbehälter in den Abwasserbehälter abgeführt wird, eine Spülflüssigkeitsmenge zu bestimmen und eine Fehlermeldung auszugeben, wenn der Verlauf der Messwerte des Sensors in dem Betriebszeitpunkt eine Spülflüssigkeitsmenge anzeigt, die kleiner oder größer als die vorbestimmte Menge an Spülflüssigkeit ist. Gemäß dieser Ausführungsform wird nach dem eigentlichen Spül- und Absaugvorgang des Abwassers und Spülwassers aus dem Becken ein Nachspülvorgang durchgeführt, bei dem eine kleine Menge an Spülwasser dem Becken zugeführt und daraus wieder abgesaugt wird. Dieser Nachspülvorgang und Absaugvorgang wird durch Messwerte des Drucksensors im ersten Zwischenbehälter erfasst. Auf Grundlage dieser Messwerte kann dabei bestimmt werden, ob die vorbestimmte Menge an Spülwasser in das Becken abgegeben wurde und daraus abgesaugt wurde. Wird dabei festgestellt, dass eine größere oder eine kleinere Spülwassermenge in den ersten Zwischenbehälter eingesaugt wurde, so lässt dies darauf schließen, dass im ersteren Fall ein Fehler in der Zufuhr des Spülwassers vorliegt und Spülwasser an anderer Stelle verloren geht, im zweiten Fall zu viel Spülwasser in das Becken fließt und potentiell ein Überlaufen des Beckens verursachen kann. Beide Fehlerzustände können zu einer entsprechenden Fehlermeldung führen und erfindungsgemäß auch zu einer Unterbrechung des Betriebs der Sanitäreinrichtung führen. Dabei ist zu verstehen, dass die hierbei aufgetretenen Fehler aus einer Zeitspanne zwischen dem Hauptspülvorgang und dem Nachspülvorgang resultieren und dementsprechend der Nachspülvorgang innerhalb eines vorbestimmten Zeitraums, der nicht zu klein sein darf, nach dem Hauptspülvorgang der Sanitäreinrichtung ausgeführt werden muss.

Erfindungsgemäß ist vorgesehen, dass die Vergleichseinheit ausgebildet ist, um voneinander verschiedene Fehlermeldungen auszugeben und im zuvor beschriebenen Fall a) eine Fehlermeldung ausgegeben wird, die anzeigt, dass eine Leckage des Zwischenbehälters oder ein Ausfall eines Vakuumerzeugers vorliegt, im Fall b) eine Fehlermeldung ausgegeben wird, die anzeigt, dass eine Verstopfung in der Abwasserleitung zwischen Becken und Zwischenbehälter vorliegt. Vorzugsweise wird im Fall c) eine Fehlermeldung ausgegeben , die anzeigt, dass eine Leckage im Wasserspülsystem vorliegt. Gemäß dieser Ausführungsform wird mittels der Fehlermeldung angezeigt, welche Art von Defekt durch den Vergleich der Messwerte mit den Sollwerten festgestellt wurde und diese Art von Defekt durch eine codierte Fehlermeldung oder eine Klartextfehlermeldung ausgegeben. Diese Ausgabe kann in Form einer Datenübermittlung auf drahtlosem Weg, einer optischen Anzeige oder dergleichen erfolgen.

Gemäß einer weiteren bevorzugten Ausführungsform ist vorgesehen, dass ein zweiter Zwischenbehälter in die Wasserleitung zwischen Wasservorratsbehälter und Becken eingesetzt ist und ein zweiter Sensor als Füllstandssensor am zweiten Zwischenbehälter angeordnet ist. Gemäß dieser Ausführungsform ist ein erster Zwischenbehälter in der Abwasserleitung und ein zweiter Zwischenbehälter in der Wasserleitung vorgesehen und hierdurch kann eine Überwachung der Funktionen sowohl auf der Wasserzufuhrseite als auch auf der Abwasserabfuhrseite erfolgen.

Der Füllstandsensor kann so ausgeführt sein, dass er das Vorhandensein von Flüssigkeit auf einem bestimmten Niveau des zweiten Zwischenbehälters anzeigt oder dass er das Füllstandsniveau im zweiten Zwischenbehälter quantitativ erfasst. Mithilfe des Füllstandssensors kann somit erfasst werden, ob ein bestimmtes Niveau der Flüssigkeit im zweiten Zwischenbehälter erreicht oder überschritten wurde.

Dabei ist es besonders bevorzugt, wenn der Füllstandssensor angeordnet und ausgebildet ist, um ein Signal auszugeben, wenn das Wasser im zweiten Zwischenbehälter oberhalb eines Sollstands ist. Mittels einer solchen Anordnung des Füllstandssensors, beispielsweise indem der Füllstandssensor selbst auf einer Höhe angeordnet ist, die oberhalb eines Sollstandes im zweiten Zwischenbehälter liegt, wird eine besonders bevorzugte Steuerungsweise ermöglicht. Hiernach wird der zweite Zwischenbehälter aus dem Wasservorratsbehälter mit Wasser befüllt, bis der Füllstandssensor anzeigt, dass das Wasser oberhalb des Sollstands liegt und hierauffolgend eine kleinere vorbestimmte Menge an Wasser aus dem zweiten Zwischenbehälter in das Becken abgegeben wird, um auf diese Weise den Sollstand zu erreichen. Der Füllstandssensor zeigt in diesem Fall kein Signal an, da die Flüssigkeit unterhalb des von dem Füllstandssensors überwachten Niveaus liegt, zeigt aber unmittelbar eine Überschreitung des Sollstands an, indem er dann aus dem nicht aktivierten in den aktivierten Zustand übergeht, wenn durch einen Defekt Wasser in den zweiten Zwischenbehälter strömt.

Zu diesem Zweck ist es besonders bevorzugt, wenn die Vergleichseinheit ausgebildet ist, um in einem Standby-Betrieb, in dem kein Spülvorgang stattfindet, eine Fehlermeldung auszugeben, wenn der Füllstandssensor ein Signal ausgibt, dass Wasser im zweiten Zwischenbehälter oberhalb eines Sollstands ist. Mittels dieser Ausgestaltung wird zuverlässig verhindert, dass der zweite Zwischenbehälter überläuft, wenn beispielsweise das Ventil zwischen Wasservorratsbehälter und zweiten Zwischenbehälter defekt ist, indem ein Überschreiten des Sollstands durch den Füllstandssensor unmittelbar erfasst und durch die Vergleichseinheit festgestellt werden kann.

Noch weiter ist es bevorzugt, wenn eine Steuerungseinheit bei einem Signal, wonach Wasser im zweiten Zwischenbehälter oberhalb eines Sollstands ist, einen Absaugvorgang aus dem zweiten Zwischenbehälter ausführt und eine Fehlermeldung ausgibt. Mittels der Steuerungseinheit kann auf diese Weise ein Überlaufen des zweiten Zwischenbehälters vermieden werden und das überschüssige Wasser aus dem zweiten Zwischenbehälter abgeführt werden. Zugleich wird der festgestellte Defekt angezeigt, sodass eine Reparatur in die Wege geleitet werden kann. Gegebenenfalls wird das Absaugen mehrfach wiederholt, sodass aufgrund des Defekts zwar das Wasser aus dem Wasservorratsbehälter nach und nach in den Abwassertank überführt wird, ein Auslaufen und Überlaufen mit entsprechenden Folgeschäden aber vermieden wird.

Gemäß einer weiteren bevorzugten Ausführungsform ist vorgesehen, dass eine Steuerungseinheit einen Befüllvorgang des zweiten Zwischenbehälters steuert, indem der zweite Zwischenbehälter mit Wasser aus dem Wasservorratsbehälter aufgefüllt wird, bis der Füllstandssensor ein Signal ausgibt, welches anzeigt, dass der Wasserstand im zweiten Zwischenbehälter oberhalb eines Sollstandes ist, und darauffolgend eine vorbestimmte Menge von Wasser aus dem ersten Zwischenbehälter in das Becken abgeleitet wird. Mit dieser Steuerungsweise kann zuverlässig ein Vorratswasserstand im zweiten Zwischenbehälter eingestellt werden, der unterhalb des Pegels liegt, bei dem der Füllstandssensor auslöst auf einem Sollstand. Die Wassermenge gemäß Sollstand reicht dabei aus, um einen Spülvorgang durchzuführen. Zugleich kann die kleine vorbestimmte Menge von Wasser, die aus dem zweiten Zwischenbehälter nach Befüllen über den Sollstand abgeführt wird, für eine zuvor beschriebene Nachspülung verwendet werden. Durch die Lage des Füllstandssensors oberhalb des Sollstands wird zugleich ein defektbedingtes Ansteigen des Wasserstands im zweiten Zwischenbehälter über den Sollstand hinaus unmittelbar erfasst und kann durch eine Fehlermeldung signalisiert werden.

Ein weiterer Aspekt der Erfindung ist ein Verfahren zur Erkennung eines Betriebsfehlers in einer Sanitäreinrichtung, mit den Schritten: Abführen von Abwasser aus einem Becken in einen ersten Zwischenbehälter durch Beaufschlagen des ersten Zwischenbehälters mit einem Unterdruck oder Zuführen von Wasser aus einem Wasservorratsbehälter in einen zweiten Zwischenbehälter und Auspressen des Wassers aus dem zweiten Zwischenbehälter in ein Becken durch Beaufschlagen des Wassers im zweiten Zwischenbehälter mit einem Überdruck, bei dem mittels eines Sensors am ersten oder zweiten Zwischenbehälter ein Messwert erfasst wird, der einen Zustand im ersten bzw. zweiten Zwischenbehälter charakterisiert, und der Messwert mittels einer elektronischen Vergleichseinheit mit einem Sollwert aus Ablaufdaten, die in einer elektronischen Speichereinheit gespeichert sind, verglichen wird, und bei Abweichung des Messwerts von dem Sollwert eine Fehlermeldung ausgegeben wird.

Das Verfahren kann fortgebildet werden, indem der Sensor ein Drucksensor am ersten Zwischenbehälter ist, und eine Fehlermeldung ausgegeben wird, wenn der Messwert des Sensors in einem Betriebszeitpunkt, zu dem im Zwischenbehälter ein Unterdruck aufgebaut wird, einen Unterdruck anzeigt, der kleiner ist als ein Sollunterdruck, oder der Messwert des Sensors in einem Betriebszeitpunkt, zu dem Flüssigkeit aus dem Becken in den Zwischenbehälter gesaugt wird, einen Unterdruckverlauf anzeigt, der langsamer abfällt als ein Sollunterdruckverlauf.

Weiterhin kann das Verfahren fortgebildet werden, indem der Sensor ein Füllstandssensor am zweiten Zwischenbehälter ist, und eine Fehlermeldung ausgegeben wird, wenn der Messwert des Sensors in einem Betriebszeitpunkt, zu dem im Standby-Betrieb Wasser unterhalb eines Sollstands gelagert wird, der Messwert des Füllstandssensors anzeigt, dass das Wasser im Zwischenbehälter über den Sollstand angestiegen ist.

Schließlich kann das Verfahren fortgebildet werden, indem nach einem Absaugvorgang aus dem Becken ein Nachspülvorgang gesteuert wird, indem eine Ansteuerung erfolgt, die eine vorbestimmte Menge an Spülflüssigkeit dem Becken zuführen würde, ein Unterdruck in dem ersten Zwischenbehälter aufgebaut wird, der erste Zwischenbehälter mit dem Becken in Fluidverbindung gesetzt wird, die Spülflüssigkeit aus dem Becken in den ersten Zwischenbehälter gesaugt wird, die Fluidverbindung zwischen Becken und erstem Zwischenbehälter geschlossen wird, ein Überdruck im ersten Zwischenbehälter aufgebaut wird, und der erste Zwischenbehälter mit dem Abwassertank verbunden wird, und der Verlauf der Messwerte des Drucksensors in einem Betriebszeitpunkt, zu dem die Spülflüssigkeit aus dem Becken in den ersten Zwischenbehälter gesaugt wird oder die Spülflüssigkeit aus dem ersten Zwischenbehälter in den Abwasserbehälter abgeführt wird, mit einem Sollwertverlauf verglichen wird, der den Druckverlauf für die vorbestimmte Menge an Spülflüssigkeit definiert und eine Fehlermeldung ausgegeben wird, wenn der Verlauf der Messwerte des Drucksensors in dem Betriebszeitpunkt eine Spülflüssigkeitsmenge anzeigt, die kleiner oder größer als die vorbestimmte Menge an Spülflüssigkeit ist.

Bezüglich des Verfahrens und der Verfahrensfortbildungen wird Bezug genommen auf die zuvor erläuterte Sanitärvorrichtung, deren Fortbildungen und Betriebsweisen, welche in entsprechender Weise auch auf das Verfahren und dessen Fortbildungen anwendbar sind.

Eine bevorzugte Ausführungsform der Erfindung wird anhand der anhängenden Figuren erläutert. Es zeigen:

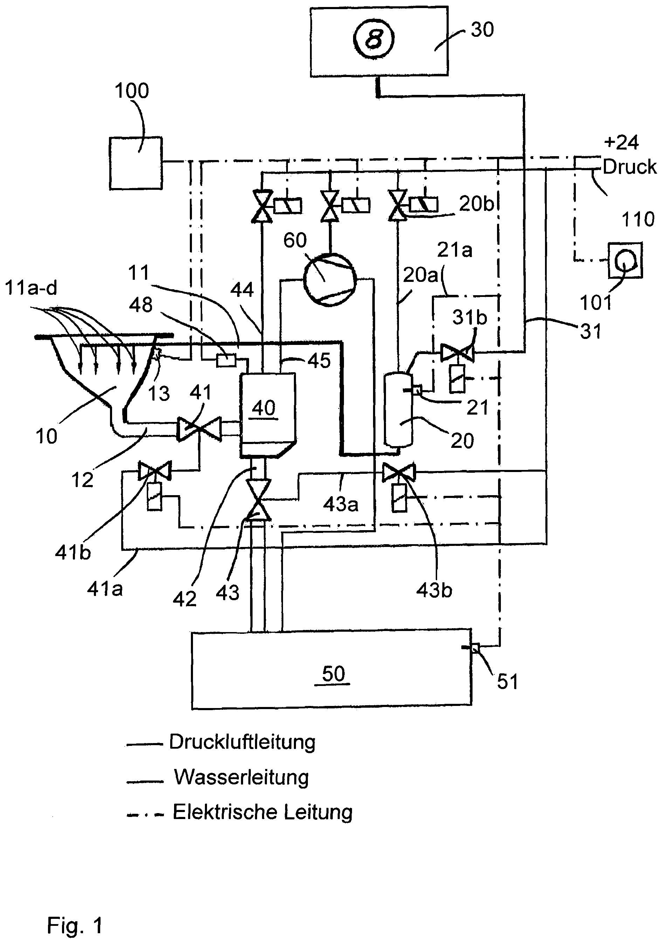

- Figur 1: einen schematischen Aufbau einer bevorzugten Ausführungsform einer Sanitärvorrichtung gemäß der Erfindung,
- Figur 2a-c: den Ablauf eines Spül- und Absaugvorgangs eines Toilettenbeckens gemäß der bevorzugten Ausführungsform nach Figur 1.

Die bevorzugte Ausführungsform weist ein Toilettenbecken 10 auf, in das eine Spülwasserleitung 11 mit mehreren Austrittsdüsen 11a-d mündet. Die Spülwasserleitung 11 ist mit einem Spülwasserzwischenbehälter 20 verbunden, der über eine Wasserzufuhrleitung mit einem Wasservorratsbehälter 30 verbunden ist. Über die Wasserzufuhrleitung 31 kann Wasser aus dem Wasservorratsbehälter 30 schwerkraftbedingt in den Spülwasserzwischenbehälter 20 zugeführt werden.

Am Spülwasserzwischenbehälter ist auf einem nahe dem oberen Ende liegenden Niveau ein Füllstandssensor 21 angeordnet, der über eine Signalleitung 21a mit einer Steuerungseinheit 100 verbunden ist. In der Wasserzufuhrleitung 31 ist ein elektromagnetisch angesteuertes Wasserzufuhrventil 31b angeordnet, welches durch die Steuerungseinheit angesteuert wird, um den Spülwasserzwischenbehälter 20 aus dem Frischwassertank 30 zu befüllen.

Der Spülwasserzwischenbehälter ist weiterhin mittels einer Druckluftleitung 20a mit Druckluft beaufschlagbar. Die Druckluft wird hierbei über ein Spülwasserdruckluftventil 20b gesteuert.

Der Spülwasserzwischenbehälter liegt in Schwerkraftrichtung unterhalb der Austrittsdüsen 11a-d. Der Spülwasserzwischenbehälter kann daher mit Spülwasser befüllt werden und nach Schließen des Wasserzufuhrventils 31b kann durch Beaufschlagen des Spülwasserzwischenbehälters mit Druckluft dieses Wasser aus den Spülwasserdüsen 11a-d in das Becken 10 abgegeben werden. Der Füllstandssensor 21 liegt oberhalb eines Sollstands des Spülwassers im Spülwasserzwischenbehälter. Die Befüllung des Spülwasserzwischenbehälter erfolgt hierbei solcher Art, dass zunächst bis auf Höhe des Füllstandssensors Wasser aus dem Frischwassertank 30 zugeführt wird, hiernach eine kleine Menge Wasser über die Düsen 11a-d in das Becken abgegeben wird und der Pegel hierdurch unterhalb des Füllstandssensors sinkt. Der Füllstandssensor kann hiernach den Pegelstand im Spülwasserzwischenbehälter überwachen und ein Signal ausgeben, sobald der Wasserstand im Spülwasserzwischenbehälter ansteigt. Hierdurch kann ein Defekt des Ventils 31b sicher erkannt werden.

Das Becken 10 weist eine Abwasserleitung 12 auf, die über ein Abwasserventil 41 mit einem Abwasserzwischenbehälter 40 verbunden ist. Der Abwasserzwischenbehälter weist an seinem unteren Ende eine Abwassertankleitung 42 auf, die über ein Abwassertankabsperrventil 43 verschlossen und geöffnet werden kann. Die Abwassertankleitung 42 mündet in einen Abwassertank 50. Die Ventile 41 und 43 sind pneumatisch betätigt und werden durch Druckluftleitungen geöffnet und geschlossen. Hierzu sind die Ventile über entsprechende Druckluftleitungen 41a, 43a mit darin angeordneten elektromagnetischen Pneumatikventilen 41b, 43b mit einer Druckluftquelle 110 verbunden.

Der Abwasserzwischenbehälter weist weiterhin einen am oberen Ende angeordneten Druckluftanschluss 44 und einen am oberen Ende angeordneten Vakuumanschluss 45 auf. Der Vakuumanschluss 45 ist mit einer druckluftbetriebenen Vakuumpumpe 60 verbunden.

Weiterhin ist am oberen Ende des Abwasserzwischenbehälters ein Drucksensor 48 angeschlossen, der über eine Signalleitung mit der Steuerungseinheit verbunden ist.

Die Sanitärvorrichtung gemäß der bevorzugten Ausführungsform weist weiterhin einen Füllstandssensor 51 am Abwassertank sowie einen Füllstandssensor 13 am Becken auf, die ein Erreichen eines bestimmten Füllstands im Abwassertank beziehungsweise Becken mittels einer Signalleitung an die Steuerungseinheit signalisieren können.

Mittels des Drucksensors 48 kann der Aufbau des Unterdrucks im Abwasserzwischenbehälter mittels der Vakuumpumpe 60 überwacht werden. Wird hierbei ein vorbestimmtes Unterdruckniveau nicht oder zu langsam erreicht, wird hieraus auf eine defekte Vakuumpumpe oder defekte Ventile 41 oder 43 geschlossen und eine entsprechende Fehlermeldung ausgegeben. Weiterhin kann der Drucksensor 48 den Abfall des Vakuums im Abwasserzwischenbehälter als Folge von Messwerten überwachen. Hierdurch kann überprüft werden, ob das Vakuum mit einer vorbestimmten Geschwindigkeit abfällt oder nicht. Fällt das Vakuum im Abwasserzwischenbehälter beim Absaugvorgang des Abwassers aus dem Becken zu langsam ab, kann hieraus auf eine Verstopfung der Abwasserleitung 12 geschlossen werden. Ebenso kann aus einem zu langsamen Absinken des Überdrucks bei Abführen des Abwassers aus dem Abwasserzwischenbehälter 40 in den Abwassertank auf eine Verstopfung in der Abwassertankleitung 42 geschlossen werden.

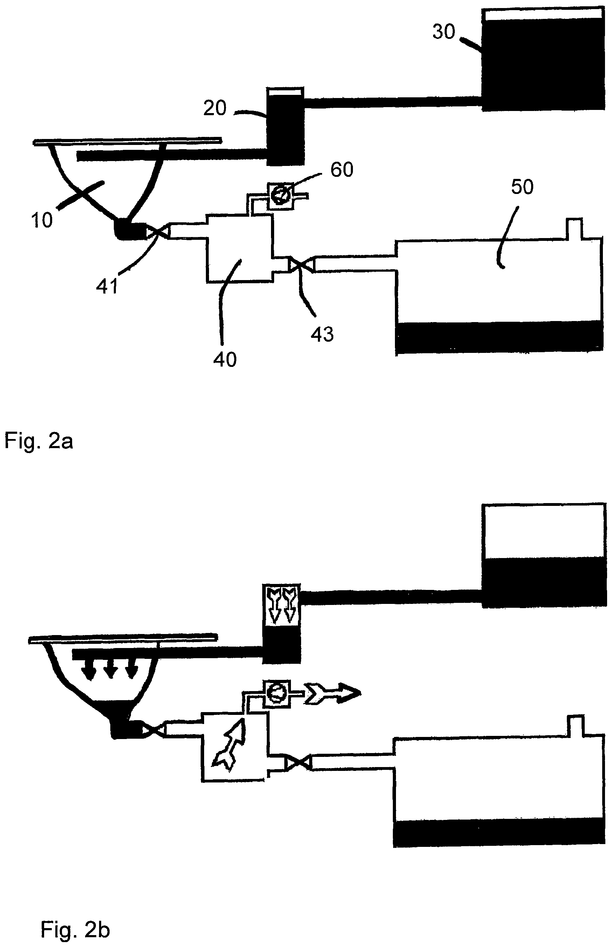

Der Ablauf eines Spül- und Absaugvorgangs bei der bevorzugten Ausführungsform wird anhand der Figuren 2a-c erläutert.

Zunächst wird aus dem Frischwassertank 30 der Spülwasserzwischenbehälter 20 gravitätisch mit Spülwasser befüllt, bis der Füllstandssensor das Erreichen des oberen Pegels anzeigt. Hierauffolgend wird eine kleine Menge Spülwasser in das Becken 10 abgegeben, sodass der Pegel unter den Füllstandssensor sinkt (Fig. 2a). Aus diesem Niveau kann dann bei Auslösen des Spülvorgangs über einen Betätigungsknopf 101 Spülwasser in das Becken abgegeben werden.

Zugleich wird über die Vakuumpumpe 60 bei geschlossenem Abwasserventil 41 und geschlossenem Abwassertankventil 43 ein Vakuum im Abwasserzwischenbehälter erzeugt. Die Höhe dieses Vakuums wird durch den Drucksensor am Abwasserzwischenbehälter überwacht und bei Erreichen eines vorbestimmten Unterdrucks die Vakuumpumpe abgeschaltet (Fig. 2b). Wird die vorbestimmte Höhe des Vakuums nicht innerhalb einer vorbestimmten Höchstdauer erreicht oder steigt das Vakuum nur gering an, so wird anhand der Messwerte des Drucksensors durch die Steuerungseinheit festgestellt, dass ein Defekt der Vakuumpumpe oder das Abwasserventil oder Abwassertankventil defekt sein muss.

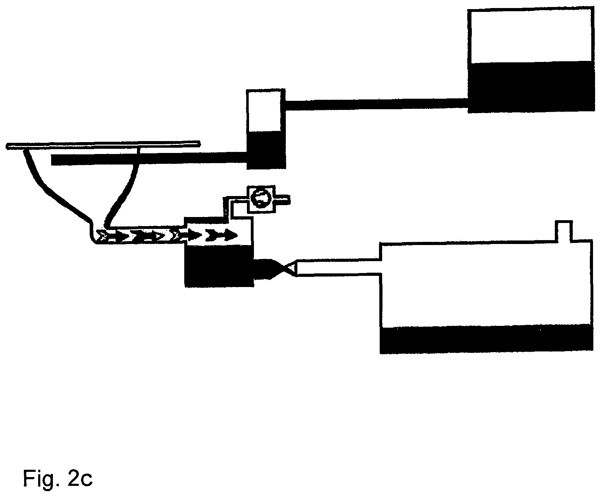

Nach Erreichen der vorbestimmten Höhe des Vakuums im Abwasserzwischenbehälter wird das Abwasserventil geöffnet und hierdurch das Abwasser aus dem Becken in den Zwischenbehälter eingesaugt (Fig. 2c). Dieser Absaugvorgang wird wiederum durch den Drucksensor überwacht, indem das hierdurch bedingte Absinken des Vakuums im Abwasserzwischenbehälter erfasst wird. Sinkt das Vakuum im Abwasserzwischenbehälter zu langsam ab, wird hieraus auf eine Verstopfung der Abwasserleitung 12 geschlossen.

Ein plötzliches Abfallen des Vakuums im Abwasserzwischenbehälter signalisiert der Steuerungseinheit, dass der gesamte Abwasserinhalt aus dem Becken abgesaugt ist. In diesem Fall wird das Abwasserventil 41 geschlossen und der Abwasserzwischenbehälter wird über die Druckluftleitung mit einem Überdruck beaufschlagt. Nach Erreichen einer vorbestimmten Höhe des Überdrucks wird das Abwassertankventil geöffnet und das Abwasser aus dem Abwasserzwischenbehälter über die Abwassertankleitung in den Abwassertank gedrückt.

## Patentansprüche

1. Mobile Sanitäreinrichtung, umfassend:
- Ein Becken (10) mit einer oberen Öffnung
- Einen Frischwassertank (30), der mit dem Becken über eine Wasserleitung verbunden ist, die dem Becken Wasser aus dem Frischwassertank zuführt,
- Einen Abwasserbehälter (50), der mit dem Becken über eine Abwasserleitung verbunden ist, die Abwasser aus dem Becken von einer Beckenauslassöffnung zu dem Abwasserbehälter abführt,
- Einen ersten Zwischenbehälter (40), der
o In die Abwasserleitung zwischen Beckenauslassöffnung und Abwasserbehälter (50)
eingesetzt ist,
wobei am ersten Zwischenbehälter (40) ein erster Sensor zur Erfassung eines Messwerts, der einen Zustand im ersten Zwischenbehälter charakterisiert, angeordnet ist und wobei eine elektronische Überwachungseinheit bereitgestellt ist, welche signaltechnisch mit dem ersten Sensor gekoppelt ist und eine elektronische Speichereinheit umfasst, in der Ablaufdaten gespeichert sind, die mindestens einen Sollwert eines Betriebsvorgangs der Wasserabfuhr aus dem Becken (10) zu dem Abwasserbehälter (50) darstellen, und dass die elektronische Überwachungseinheit weiterhin eine elektronische Vergleichseinheit umfasst, die ausgebildet ist, um den Messwert des ersten Sensors mit dem Sollwert des Betriebsvorgangs zu vergleichen und bei Abweichung des Messwerts von dem Sollwert eine Fehlermeldung auszugeben,
und eine Steuerungseinheit vorhanden und ausgebildet ist, um einen Absaugvorgang aus dem Becken zu steuern, indem
- ein Unterdruck in dem ersten Zwischenbehälter (40) aufgebaut wird,
- der erste Zwischenbehälter mit dem Becken (10) in Fluidverbindung gesetzt wird,
- Flüssigkeit aus dem Becken in den ersten Zwischenbehälter gesaugt wird,
- die Fluidverbindung zwischen Becken und erstem Zwischenbehälter geschlossen wird,
- ein Überdruck im ersten Zwischenbehälter aufgebaut wird, und
- der erste Zwischenbehälter mit dem Abwassertank (50) verbunden wird,
**dadurch gekennzeichnet, dass** die Vergleichseinheit ausgebildet ist, um eine Fehlermeldung auszugeben, wenn
a) Der Messwert des Sensors in einem Betriebszeitpunkt, zu dem im Zwischenbehälter ein Unterdruck aufgebaut wird, einen Unterdruck anzeigt, der kleiner ist als ein Sollunterdruck, oder
b) Der Messwert des Sensors in einem Betriebszeitpunkt, zu dem Flüssigkeit aus dem Becken in den ersten Zwischenbehälter gesaugt wird, einen Unterdruckverlauf anzeigt, der langsamer abfällt als ein Sollunterdruckverlauf,
und dass die Vergleichseinheit ausgebildet ist um voneinander verschiedene Fehlermeldungen auszugeben und
- im Fall a) eine Fehlermeldung ausgegeben wird, die anzeigt, dass eine Leckage des Zwischenbehälters oder ein Ausfall eines Vakuumerzeugers (60) vorliegt,
- im Fall b) eine Fehlermeldung ausgegeben wird, die anzeigt, dass eine Verstopfung in der Abwasserleitung zwischen Becken (10) und erstem Zwischenbehälter vorliegt.

2. Sanitäreinrichtung nach Anspruch 1,
**dadurch gekennzeichnet, dass**
- Der erste Sensor eine Folge von Messwerten aufnimmt und
- in der elektronischen Speichereinheit eine Abfolge von mehreren zeitlich aufeinander Sollwerten gespeichert ist, die einen Sollwertverlauf ergeben,
und dass die elektronische Vergleichseinheit ausgebildet ist, um die Folge von Messwerten mit der Abfolge von Sollwerten zu vergleichen und bei Abweichung der Folge von Messwerten von der Abfolge von Sollwerten eine Fehlermeldung auszugeben.

3. Sanitäreinrichtung nach Anspruch 1 oder 2,
**dadurch gekennzeichnet, dass** der erste Sensor (48) ein Drucksensor ist zur Messung eines Über- oder Unterdrucks im ersten Zwischenbehälter (40),
der Messwert bzw. die Folge von Messwerten einen Über- oder Unterdruck bzw. Über- oder Unterdruckverlauf im ersten Zwischenbehälter charakterisieren, und
der Sollwert bzw. die Abfolge von Sollwerten einen Sollüber- bzw. Sollunterdruck bzw. einen Sollüber- bzw. -Sollunterdruckverlauf im ersten Zwischenbehälter definieren.

4. Sanitäreinrichtung nach einem der vorhergehenden Ansprüche,
**dadurch gekennzeichnet, dass** die Steuerungseinheit ausgebildet ist, um nach dem Absaugvorgang einen Nachspülvorgang aus dem Becken (10) zu steuern, indem
- die Steuerungseinheit einen Ablauf ansteuert, der eine vorbestimmte Menge an Spülflüssigkeit dem Becken zuführen würde,
- ein Unterdruck in dem ersten Zwischenbehälter aufgebaut wird,
- der erste Zwischenbehälter mit dem Becken (10) in Fluidverbindung gesetzt wird,
- die Spülflüssigkeit aus dem Becken in den ersten Zwischenbehälter (40) gesaugt wird,
- die Fluidverbindung zwischen Becken und erstem Zwischenbehälter geschlossen wird,
- ein Überdruck im ersten Zwischenbehälter aufgebaut wird, und
- der erste Zwischenbehälter mit dem Abwassertank (50) verbunden wird,
und dass die Vergleichseinheit ausgebildet ist, um anhand des Verlaufs der Messwerte des Sensors in einem Betriebszeitpunkt, zu dem die Spülflüssigkeit aus dem Becken in den ersten Zwischenbehälter gesaugt wird oder die Spülflüssigkeit aus dem ersten Zwischenbehälter in den Abwasserbehälter abgeführt wird, eine Spülflüssigkeitsmenge zu bestimmen und eine Fehlermeldung auszugeben, wenn
c) Der Verlauf der Messwerte des Sensors in dem Betriebszeitpunkt eine Spülflüssigkeitsmenge anzeigt, die kleiner oder größer als die vorbestimmte Menge an Spülflüssigkeit ist.

5. Sanitäreinrichtung nach Anspruch 4,
**dadurch gekennzeichnet, dass** die Vergleichseinheit ausgebildet ist um
- im Fall c) eine Fehlermeldung ausgegeben wird, die anzeigt, dass eine Leckage im Wasserspülsystem vorliegt.

6. Sanitäreinrichtung nach einem der vorhergehenden Ansprüche 1-3,
**dadurch gekennzeichnet, dass** ein zweiter Zwischenbehälter (20) in die Wasserleitung zwischen Frischwassertank (30) und Becken (10) eingesetzt ist und ein zweiter Sensor (21) als Füllstandssensor am zweiten Zwischenbehälter angeordnet ist.

7. Sanitäreinrichtung nach Anspruch 6,
**dadurch gekennzeichnet, dass** der Füllstandssensor (21) angeordnet und ausgebildet ist, um ein Signal auszugeben, wenn das Wasser im zweiten Zwischenbehälter (20) oberhalb eines Sollstands ist.

8. Sanitäreinrichtung nach Anspruch 7,
**dadurch gekennzeichnet, dass** die Vergleichseinheit ausgebildet ist, um
- In einem Standby-Betrieb, in dem kein Spülvorgang stattfindet, eine Fehlermeldung auszugeben, wenn der Füllstandssensor (21) ein Signal ausgibt, dass Wasser im zweiten Zwischenbehälter (20) oberhalb eines Sollstands ist,
wobei vorzugweise eine Steuerungseinheit bei einem Signal, wonach Wasser im zweiten Zwischenbehälter oberhalb eines Sollstands ist, einen Absaugvorgang aus dem zweiten Zwischenbehälter (20) ausführt und eine Fehlermeldung ausgibt.

9. Sanitäreinrichtung nach einem der vorhergehenden Ansprüche 7-8,
**dadurch gekennzeichnet, dass** eine Steuerungseinheit einen Befüllvorgang des zweiten Zwischenbehälters (20) steuert, indem
- der zweite Zwischenbehälter mit Wasser aus dem Frischwassertank (30) aufgefüllt wird bis der Füllstandssensor (21) ein Signal ausgibt, welches anzeigt, dass der Wasserstand im zweiten Zwischenbehälter oberhalb eines Sollstandes ist, und darauffolgend
- eine vorbestimmte Menge von Wasser aus dem zweiten Zwischenbehälter in das Becken (10) abgeleitet wird.

10. Verfahren zur Erkennung eines Betriebsfehlers in einer Sanitäreinrichtung, mit den Schritten:
- Abführen von Abwasser aus einem Becken (10) in einen ersten Zwischenbehälter (40) durch Beaufschlagen des ersten Zwischenbehälters mit einem Unterdruck oder
- Zuführen von Wasser aus einem Frischwassertank (30) in einen zweiten Zwischenbehälter (20) und Auspressen des Wassers aus dem zweiten Zwischenbehälter in ein Becken (10) durch Beaufschlagen des Wassers im zweiten Zwischenbehälter mit einem Überdruck,
**dadurch gekennzeichnet, dass** mittels eines Sensors am ersten oder zweiten Zwischenbehälter ein Messwert erfasst wird, der einen Zustand im ersten bzw. zweiten Zwischenbehälter charakterisiert, und dass der Messwert mittels einer elektronischen Vergleichseinheit mit einem Sollwert aus Ablaufdaten, die in einer elektronischen Speichereinheit gespeichert sind, verglichen wird, und dass bei Abweichung des Messwerts von dem Sollwert eine Fehlermeldung ausgegeben wird,
und dass der Sensor ein Drucksensor am ersten Zwischenbehälter (40) ist, und dass eine Fehlermeldung ausgegeben wird, wenn
a) Der Messwert des Sensors in einem Betriebszeitpunkt, zu dem im Zwischenbehälter ein Unterdruck aufgebaut wird, einen Unterdruck anzeigt, der kleiner ist als ein Sollunterdruck, oder
b) Der Messwert des Sensors in einem Betriebszeitpunkt, zu dem Flüssigkeit aus dem Becken in den Zwischenbehälter gesaugt wird, einen Unterdruckverlauf anzeigt, der langsamer abfällt als ein Sollunterdruckverlauf,
wobei voneinander verschiedene Fehlermeldungen ausgegeben werden und
- im Fall a) eine Fehlermeldung ausgegeben wird, die anzeigt, dass eine Leckage des Zwischenbehälters oder ein Ausfall eines Vakuumerzeugers (60) vorliegt,
- im Fall b) eine Fehlermeldung ausgegeben wird, die anzeigt, dass eine Verstopfung in der Abwasserleitung zwischen Becken und erstem Zwischenbehälter vorliegt.

11. Verfahren nach Anspruch 10,
**dadurch gekennzeichnet, dass** der Sensor ein Füllstandssensor am zweiten Zwischenbehälter (20) ist, und dass eine Fehlermeldung ausgegeben wird, wenn
c) Der Messwert des Sensors in einem Betriebszeitpunkt, zu dem im Standby-Betrieb Wasser unterhalb eines Sollstands gelagert wird, der Messwert des Füllstandssensors anzeigt, dass das Wasser im Zwischenbehälter über den Sollstand angestiegen ist.

12. Verfahren nach einem der vorhergehenden Ansprüche 10-11,
**dadurch gekennzeichnet, dass** nach einem Absaugvorgang aus dem Becken ein Nachspülvorgang gesteuert wird, indem
- Eine Ansteuerung erfolgt, die eine vorbestimmte Menge an Spülflüssigkeit dem Becken (10) zuführen würde,
- ein Unterdruck in dem ersten Zwischenbehälter (40) aufgebaut wird,
- der erste Zwischenbehälter mit dem Becken in Fluidverbindung gesetzt wird,
- Die Spülflüssigkeit aus dem Becken in den ersten Zwischenbehälter gesaugt wird,
- die Fluidverbindung zwischen Becken und erstem Zwischenbehälter geschlossen wird,
- ein Überdruck im ersten Zwischenbehälter aufgebaut wird, und
- der erste Zwischenbehälter mit dem Abwassertank (50) verbunden wird,
und dass der Verlauf der Messwerte des Drucksensors in einem Betriebszeitpunkt, zu dem die Spülflüssigkeit aus dem Becken in den ersten Zwischenbehälter gesaugt wird oder die Spülflüssigkeit aus dem ersten Zwischenbehälter in den Abwasserbehälter abgeführt wird, mit einem Sollwertverlauf verglichen wird, der den Druckverlauf für die vorbestimmte Menge an Spülflüssigkeit definiert und eine Fehlermeldung ausgegeben wird, wenn
b) Der Verlauf der Messwerte des Drucksensors in dem Betriebszeitpunkt eine Spülflüssigkeitsmenge anzeigt die kleiner oder größer als die vorbestimmte Menge an Spülflüssigkeit ist.

## Claims

1. A mobile sanitary device, comprising:
- a bowl having an upper opening,
- a freshwater tank which is connected to the bowl via a water conduit that supplies water from the freshwater tank to the bowl,
- a wastewater tank which is connected to the bowl via a wastewater line that discharges the wastewater out of the bowl from a bowl outlet opening to the wastewater tank,
- a first intermediate tank which is inserted into the wastewater line between the bowl outlet opening and the wastewater tank,
wherein a first sensor for detecting a measured value characterising a status in the first intermediate tank is arranged on the first intermediate tank and wherein an electronic monitoring unit is provided which is in signal communication with the first sensor and comprises an electronic memory unit in which process data are stored which represent at least one setpoint value of an operational process of water discharge out of the bowl to the wastewater tank, and wherein the electronic monitoring unit further comprises an electronic comparator unit which is configured to compare the measured value from the first sensor with the setpoint value of the operational process and to output an error message if the measured value differs from the setpoint value,
wherein there is a control unit which is configured to control a suction operation out of the bowl, in that
- an underpressure is produced in the first intermediate tank,
- the first intermediate tank is placed into fluidic communication with the bowl,
- liquid from the bowl is sucked into the first intermediate tank,
- the fluidic communication between the bowl and the first intermediate tank is closed,
- an overpressure is produced in the first intermediate tank, and
- the first intermediate tank is connected to the wastewater tank,
and that the electronic comparator unit is configured to output an error message when
a) the measured value from the sensor indicates an underpressure which is less than a setpoint underpressure, at an operating point at which an underpressure is being produced in the intermediate tank, or
b) the measured value from the sensor indicates an underpressure time curve which falls more slowly than a setpoint underpressure time curve, at an operating point at which liquid is sucked out of the bowl into the first intermediate tank,
and wherein the electronic comparator unit is configured to output error messages that differ from each other and
- in case a) an error message is outputted which indicates that there is a leak in the first intermediate tank or a failure of a vacuum generator,
- in case b) an error message is outputted which indicates that there is a blockage in the wastewater line between the bowl and the first intermediate tank.

2. The sanitary device according to claim 1,
**characterized in that**
- the first sensor records a series of measured values and
- a sequence comprising a plurality of consecutive setpoint values that form a setpoint profile is stored in the electronic memory unit,
and the electronic comparator unit is configured to compare the series of measured values with the sequence of setpoint values and to output an error message if the series of measured values differs from the sequence of setpoint values.

3. The sanitary device according to claim 1 or 2,
**characterized in that** the first sensor (48) is a pressure sensor for measuring an overpressure or underpressure in the first intermediate tank (40),
the measured value or the series of measured values, respectively, characterises an overpressure or underpressure, or an overpressure or underpressure time curve in the first intermediate tank, and
the setpoint value or the sequence of setpoint values, respectively, defines a setpoint overpressure or underpressure or a setpoint overpressure and underpressure time curve in the first intermediate tank.

4. The sanitary device according to any of the preceding claims,
**characterized in that** the control unit is configured to control a final flushing operation out of the bowl (10), after the suction operation, **in that**
- the control unit initiates a process which would supply a predetermined amount of flushing fluid to the bowl,
- an underpressure is produced in the first intermediate tank,
- the first intermediate tank is placed into fluidic communication with the bowl,
- the flushing fluid is sucked out of the bowl into the first intermediate tank,
- the fluidic communication between the bowl and the first intermediate tank is closed,
- an overpressure is produced in the first intermediate tank, and
- the first intermediate tank is connected to the wastewater tank,
and **in that** the electronic comparator unit is configured to determine an amount of flushing fluid on the basis of the time curve of the measured values from the first sensor at an operating point at which the flushing fluid is sucked out of the bowl into the first intermediate tank or the flushing fluid is discharged from the first intermediate tank into the wastewater tank, and to output an error message if
c) at that operating point the time curve of the measured values from the first sensor indicates an amount of flushing fluid which is less than or more than the predetermined amount of flushing fluid.

5. The sanitary device according to claim 4,
**Characterized in that** the electronic comparator unit is configured to output
- in case c) an error message which indicates that there is a leak in the flushing system.

6. The sanitary device according to any one of the preceding claims 1 to 3,
**characterized in that** a second intermediate tank (20) is inserted into the water conduit between the freshwater tank and the bowl and that a second sensor is arranged as a filling-level sensor on the second intermediate tank.

7. The sanitary device according to claim 6,
**characterized in that** the filling-level sensor (21) is arranged and configured to output a signal when the water in the second intermediate tank (20) is above a setpoint level.

8. The sanitary device according to claim 7,
**characterized in that** the electronic comparator unit is configured
- to output an error message, in standby operation during which no flushing occurs, if the filling-level sensor (21) outputs a signal that water in the second intermediate tank (20) is above a setpoint level.
Wherein preferably a control unit performs a suction operation from the second intermediate tank (20) and outputs an error message if a signal is received that water in the second intermediate tank is above a setpoint level.

9. The sanitary device according to any one of the preceding claims 7 to 8,
**characterized in that** a control unit controls filling of the second intermediate tank (20), **in that**
- the second intermediate tank is filled with water from the freshwater tank (30) until the filling-level sensor (21) outputs a signal indicating that the water level in the second intermediate tank is above a setpoint level, after which
- a predetermined amount of water is discharged from the second intermediate tank into the bowl (10).

10. A method for detecting an operating error in a sanitary device, comprising the steps of:
- discharging wastewater from a bowl (10) into a first intermediate tank (40) by applying an underpressure to the first intermediate tank, or
- discharging water from a freshwater tank (30) into a second intermediate tank (20) and pressing the water out of the second intermediate tank into a bowl (10) by applying an overpressure to the water in the second intermediate tank,
**characterised in that**, by means of a sensor on the first or second intermediate tank, a measured value is detected which characterises a status in the first or second intermediate tank, and **in that** the measured value is compared by means of an electronic comparator unit with a setpoint value obtained from process data stored in an electronic memory unit, and **in that** an error message is outputted if the measured value differs from the setpoint value,
wherein the sensor is a pressure sensor on the first intermediate tank (40), and that an error message is outputted when
a) the measured value from the pressure sensor indicates an underpressure which is less than a setpoint underpressure, at an operating point at which an underpressure is being produced in the first intermediate tank, or
b) the measured value from the pressure sensor indicates an underpressure time curve which falls more slowly than a setpoint underpressure time curve, at an operating point at which liquid is sucked out of the bowl into the first intermediate tank,
wherein error messages that differ from each other, are outputted, and
in case a) an error message is outputted which indicates that there is a leak in the first intermediate tank or a failure of a vacuum generator,
in case b) an error message is outputted which indicates that there is a blockage in the wastewater line between the bowl and the first intermediate tank, and

11. A method according to claim 10
**Characterized in that** the sensor is a filling-level sensor on the second intermediate tank (20), and that an error message is outputted when
c) the measured value from the filling-level sensor indicates that the water in the second intermediate tank has risen above the setpoint level at an operating point at which water is stored below a setpoint value in standby operation,
in case c) an error message is outputted which indicates that there is a leak in the flushing system.

12. The method according to claim 10 or 11
**characterised in that** after the suction operation, a final flushing operation out of the bowl is controlled, **in that**
- a process is initiated which would supply a predetermined amount of flushing fluid to the bowl,
- an underpressure is produced in the first intermediate tank,
- the first intermediate tank is placed into fluidic communication with the bowl,
- the flushing fluid is sucked out of the bowl into the first intermediate tank,
- the fluidic communication between the bowl and the first intermediate tank is closed,
- an overpressure is produced in the first intermediate tank, and
- the first intermediate tank is connected to the wastewater tank,
and that the time curve of the measured values from the pressure sensor, at an operating point at which the flushing fluid is sucked out of the bowl into the first intermediate tank or the flushing fluid is discharged from the first intermediate tank into the wastewater tank, is compared with a setpoint time curve which defines the pressure time curve for the predetermined amount of flushing fluid and outputs an error message when the time curve of the measured values from the pressure sensor at that operating point indicates an amount of flushing fluid which is less than or more than the predetermined amount of flushing fluid.

## Revendications

1. Appareil sanitaire mobile, comprenant :
- une cuve (10) avec une ouverture supérieure
- un réservoir d'eau fraîche (30), qui est relié à la cuve par l'intermédiaire d'un conduit d'eau, qui amène à la cuve de l'eau provenant du réservoir d'eau fraîche,
- un contenant d'eaux usées (50), qui est relié à la cuve par l'intermédiaire d'un conduit d'eaux usées, qui évacue des eaux usées hors de la cuve depuis une ouverture de sortie de cuve vers le contenant d'eaux usées,
- un premier contenant intermédiaire (40), qui
-- est inséré dans le conduit d'eaux usées entre l'ouverture de sortie de cuve et le contenant d'eaux usées (50)
dans lequel est disposé sur le premier contenant intermédiaire (40) un premier capteur pour la détection d'une valeur de mesure, qui caractérise un état dans le premier contenant intermédiaire,
dans lequel est fournie une unité de surveillance électronique, laquelle est couplée par une technique de signalisation au premier capteur et comprend une unité de stockage électronique, dans laquelle sont stockées des données de déroulement, qui constituent au moins une valeur de consigne d'une opération de fonctionnement de l'évacuation d'eau depuis la cuve (10) vers le contenant d'eaux usées (50), et que l'unité de surveillance électronique comprend par ailleurs une unité de comparaison électronique, qui est réalisée pour comparer la valeur de mesure du premier capteur à la valeur de consigne de l'opération de fonctionnement et pour envoyer, en cas d'écart de la valeur de mesure par rapport à la valeur de consigne, un message d'erreur,
et une unité de commande est présente et réalisée pour commander une opération d'évacuation par aspiration hors de la cuve en ce que
- une dépression est établie dans le premier contenant intermédiaire (40),
- le premier contenant intermédiaire est mis en communication fluidique avec la cuve (10),
- du liquide est aspiré depuis la cuve dans le premier contenant intermédiaire,
- la communication fluidique entre la cuve et le premier contenant intermédiaire est fermée,
- une surpression est établie dans le premier contenant intermédiaire, et
- le premier contenant intermédiaire est relié au réservoir d'eaux usées (50),
**caractérisé en ce que** l'unité de comparaison est réalisée pour envoyer un message d'erreur quand a) la valeur de mesure du capteur affiche, à un moment de fonctionnement, auquel une dépression est établie dans le contenant intermédiaire, une dépression, qui est inférieure à une dépression de consigne, ou
b) la valeur de mesure du capteur indique, à un moment de fonctionnement, auquel du liquide est aspiré hors de la cuve dans le premier contenant intermédiaire, une évolution de dépression qui chute plus lentement que l'évolution de dépression de consigne,
et que l'unité de comparaison est réalisée pour envoyer des messages d'erreur différents les uns des autres, et
- dans le cas a) un message d'erreur est envoyé, lequel indique qu'une fuite du contenant intermédiaire ou une panne du générateur de vide (60) existe,
- dans le cas b) un message d'erreur est envoyé, lequel indique qu'une obstruction existe dans le conduit d'eaux usées entre la cuve (10) et le premier contenant intermédiaire.

2. Appareil sanitaire selon la revendication 1, **caractérisé en ce que**
- le premier capteur enregistre une suite de valeurs de mesure, et
- est stockée dans l'unité de stockage électronique une succession de plusieurs valeurs de consigne consécutives, qui donnent lieu à une évolution de valeur de consigne,
et que l'unité de comparaison électronique est réalisée pour comparer la suite de valeurs de mesure à la succession de valeurs de consigne et pour envoyer un message d'erreur en cas d'écart de la suite de valeurs de mesure par rapport à la succession de valeurs de consigne.

3. Appareil sanitaire selon la revendication 1 ou 2,
**caractérisé en ce que** le premier capteur (48) est un capteur de pression pour la mesure d'une surpression ou d'une dépression dans le premier contenant intermédiaire (40),
la valeur de mesure ou la suite de valeurs de mesure caractérisent une surpression ou une dépression ou une évolution de surpression ou de dépression dans le premier contenant intermédiaire, et
la valeur de consigne ou la succession de valeurs de consigne définissent une surpression de consigne ou une dépression de consigne ou une évolution de surpression de consigne ou une évolution de dépression de consigne dans le premier contenant intermédiaire.

4. Appareil sanitaire selon l'une quelconque des revendications précédentes,
**caractérisé en ce que** l'unité de commande est réalisée pour commander après l'opération d'évacuation par aspiration une opération de rinçage ultérieur hors de la cuve (10) **en ce que**
- l'unité de commande pilote une évacuation, qui amènerait une quantité prédéfinie de liquide de rinçage à la cuve,
- une dépression est établie dans le premier contenant intermédiaire,
- le premier contenant intermédiaire est mis en communication fluidique avec la cuve (10),
- le liquide de rinçage provenant de la cuve est aspiré dans le premier contenant intermédiaire (40),
- la communication fluidique entre la cuve et le premier contenant intermédiaire est fermée,
- une surpression est établie dans le premier contenant intermédiaire, et
- le premier contenant intermédiaire est relié au réservoir d'eaux usées (50),
et que l'unité de comparaison est réalisée pour définir une quantité de liquide de rinçage à l'aide de l'évolution des valeurs de mesure du capteur à un moment de fonctionnement, auquel le liquide de rinçage est aspiré hors de la cuve dans le premier contenant intermédiaire ou le liquide de rinçage est évacué hors du premier contenant intermédiaire dans le contenant d'eaux usées, et pour envoyer un message d'erreur quand
c) l'évolution des valeurs de mesure du capteur indique au moment de fonctionnement une quantité de liquide de rinçage qui est inférieure ou supérieure à la quantité prédéfinie de liquide de rinçage.

5. Appareil sanitaire selon la revendication 4,
**caractérisé en ce que** l'unité de comparaison est réalisée pour
- envoyer dans le cas c) un message d'erreur, qui indique qu'une fuite existe dans le système de rinçage d'eau.

6. Appareil sanitaire selon l'une quelconque des revendications précédentes 1 à 3,
**caractérisé en ce qu'**un deuxième contenant intermédiaire (20) est inséré dans le conduit d'eau entre le réservoir d'eau fraîche (30) et la cuve (10) et un deuxième capteur (21) est disposé en tant que capteur de niveau de remplissage sur le deuxième contenant intermédiaire.

7. Appareil sanitaire selon la revendication 6,
**caractérisé en ce que** le capteur de niveau de remplissage (21) est disposé et réalisé pour envoyer un signal quand l'eau dans le deuxième contenant intermédiaire (20) est au-dessus d'un niveau de consigne.

8. Appareil sanitaire selon la revendication 7,
**caractérisé en ce que** l'unité de comparaison est réalisée
- pour envoyer dans un état de veille, dans lequel aucune opération de rinçage n'a lieu, un message d'erreur quand le capteur de niveau de remplissage (21) envoie un signal que l'eau dans le deuxième contenant intermédiaire (20) est au-dessus d'un niveau de consihne,
dans lequel de préférence une unité de commande exécute en présence d'un signal, selon lequel l'eau dans le deuxième contenant intermédiaire est au-dessus d'un niveau de consigne, exécute une opération d'évacuation par aspiration hors du deuxième contenant intermédiaire (20) et envoie un message d'erreur.

9. Appareil sanitaire selon l'une quelconque des revendications précédentes 7 et 8,
**caractérisé en ce qu'**une unité de commande commande une opération de remplissage du deuxième contenant intermédiaire (20) **en ce que**
- le deuxième contenant intermédiaire est rempli avec de l'eau provenant du réservoir d'eau fraîche (30) jusqu'à ce que le capteur de niveau de remplissage (21) envoie un signal, lequel indique que le niveau d'eau dans le deuxième contenant intermédiaire est au-dessus d'un niveau de consigne, puis
- une quantité prédéfinie d'eau est évacuée hors du deuxième contenant intermédiaire dans la cuve (10).

10. Procédé d'identification d'un dysfonctionnement dans un appareil sanitaire, avec les étapes :
- d'évacuation d'eaux usées hors d'une cuve (10) dans un premier contenant intermédiaire (40) en soumettant le premier contenant intermédiaire à l'action d'une dépression, ou
- d'amenée d'eau provenant d'un réservoir d'eau fraîche (30) dans un deuxième contenant intermédiaire (20) et de sortie par pressage de l'eau hors du deuxième contenant intermédiaire dans une cuve (10) en soumettant l'eau dans le deuxième contenant intermédiaire à l'action d'une surpression,
**caractérisé en ce qu'**est détectée au moyen d'un capteur sur le premier ou le deuxième contenant intermédiaire une valeur de mesure, qui caractérise un état dans le premier ou le deuxième contenant intermédiaire, et que la valeur de mesure est comparée au moyen d'une unité de comparaison électronique à une valeur de consigne issue de données de déroulement, qui sont stockées dans une unité de stockage électronique, et qu'en cas d'écart de la valeur de mesure par rapport à la valeur de consigne, un message d'erreur est envoyé,
et que le capteur est un capteur de pression sur le premier contenant intermédiaire (40), et
qu'un message d'erreur est envoyé quand
a) la valeur de mesure du capteur indique, à un moment de fonctionnement, auquel une dépression est établie dans le contenant intermédiaire, une dépression, qui est inférieure à une dépression de consigne, ou
b) la valeur de mesure du capteur indique, à un moment de fonctionnement, auquel du liquide provenant de la cuve est aspiré dans le contenant intermédiaire, une évolution de dépression, qui chute plus lentement qu'une évolution de dépression de consigne,
dans lequel des messages d'erreur différents les uns des autres sont envoyés, et
- dans le cas a) un message d'erreur est envoyé, qui indique qu'une fuite du contenant intermédiaire ou une panne d'un générateur de vide (60) existe,
- dans le cas b) un message d'erreur est envoyé, qui indique qu'une obstruction dans le conduit d'eaux usées existe entre la cuve et le premier contenant intermédiaire.

11. Procédé selon la revendication 10,
**caractérisé en ce que** le capteur est un capteur de niveau de remplissage sur le deuxième contenant intermédiaire (20), et qu'un message d'erreur est envoyé quand
c) la valeur de mesure du capteur du niveau de remplissage indique, à un moment de fonctionnement auquel dans le mode de veille de l'eau s'accumule sous un niveau de consigne, que l'eau dans le contenant intermédiaire est au-dessus du niveau de consigne.

12. Procédé selon l'une quelconque des revendications 10 et 11,
**caractérisé en ce qu'**après une opération d'évacuation par aspiration hors de la cuve, une opération de rinçage ultérieur est commandée **en ce que**
- un pilotage a lieu, qui amènerait une quantité prédéfinie de liquide de rinçage à la cuve (10),
- une dépression est établie dans le premier contenant intermédiaire (40) ;
- le premier contenant intermédiaire est mis en communication fluidique avec la cuve,
- le liquide de rinçage provenant de la cuve est aspiré dans le premier contenant intermédiaire,
- la communication fluidique entre la cuve et le premier contenant intermédiaire est fermée,
- une surpression est établie dans le premier contenant intermédiaire, et
- le premier contenant intermédiaire est relié au réservoir d'eaux usées (50),
et que l'évolution des valeurs de mesure du capteur de pression est comparée, à un moment de fonctionnement, auquel le liquide de rinçage provenant de la cuve est aspiré dans le premier contenant intermédiaire ou le liquide de rinçage est évacué hors du premier contenant intermédiaire dans le contenant d'eaux usées, à une évolution de valeurs de consigne, qui définit l'évolution de pression pour la quantité prédéfinie de liquide de rinçage et un message d'erreur est envoyé quand
b) l'évolution des valeurs de mesure du capteur de pression indique au moment du fonctionnement une quantité de liquide de rinçage, qui est inférieure ou supérieure à la quantité de liquide de rinçage prédéfinie.
